# EUROPEAN PATENT APPLICATION

(11) **EP 4 745 260 A1**
(43) Date of publication of application: **20.05.2026**
(21) Application number: 23947251.7
(22) Date of filing: 19.09.2023
(51) Int. Cl.: C22C 38/02, C22C 38/04, C22C 38/06, C22C 38/26, C22C 38/24, C22C 38/28, C22C 38/32, C22C 38/00, C22C 33/04, C21C 1/02, C21C 5/28, C21C 7/10, C21C 7/00, C21D 8/02, B23P 15/00

(54) **RARE EARTH-CONTAINING HIGH-STRENGTH WEAR-RESISTANT STEEL PLATE FOR EXTREMELY COLD REGION AND MANUFACTURING METHOD THEREFOR**

(30) Priority: 28.07.2023 CN 202310936041
(71) Applicant: Nanjing Iron & Steel Co., Ltd., Nanjing, Jiangsu 210035 (CN)
(72) Inventor: QIAO, Mingliang, Nanjing, Jiangsu 210035 (CN); WU, Junping, Nanjing, Jiangsu 210035 (CN); HUANG, Biaokai, Nanjing, Jiangsu 210035 (CN); HONG, Jun, Nanjing, Jiangsu 210035 (CN); YAN, Qiangjun, Nanjing, Jiangsu 210035 (CN); WANG, Xin, Nanjing, Jiangsu 210035 (CN); JIN, Jianfeng, Nanjing, Jiangsu 210035 (CN); JIANG, Zaiwei, Nanjing, Jiangsu 210035 (CN); CHEN, Gang, Nanjing, Jiangsu 210035 (CN); LEI, Xiaorong, Nanjing, Jiangsu 210035 (CN); GE, Xin, Nanjing, Jiangsu 210035 (CN); DONG, Wangyue, Nanjing, Jiangsu 210035 (CN)
(74) Representative: Gong, Jinping
(86) International application number: PCT/CN2023/119552
(87) International publication number: WO 2025/025309

(57) **Abstract**

Provided are a rare earth-containing high-strength wear-resistant steel plate for an extremely cold region and a preparation method therefor, relating to the technical field of steel production. The rare earth-containing high-strength wear-resistant steel plate is prepared from the following chemical composition in mass percentage: 0.20% to 0.24% of C, 0.20% to 0.35% of Si, 0.4% to 0.8% of Mn, 0.035% to 0.065% of Nb, 0.035% to 0.065 of V, 0.001% to 0.006% of Ti, 0.3% to 1.0% of Cr, 0.0003% to 0.0020% of B, 0.04% to 0.07% of Alt, less than or equal to 0.0050% of N, less than or equal to 0.0002% of H, less than or equal to 0.015% of P, less than or equal to 0.0020% of S, more than or equal to 10 ppm of Ce, and a balance of Fe and inevitable impurities. The steel plate has an impact energy KV2 of 64 J to 75 J at to 60°C, a yield strength of 1236 MPa to 1260 MPa, a tensile strength of 1464 MPa to 1498 MPa, an elongation A50 of 14% to 17%, and surface hardness of 449 HB to 458 HB.

## Description

### TECHNICAL FIELD

The present disclosure relates to the technical field of steel production, and in particular to a rare earth-containing high-strength wear-resistant steel plate for an extremely cold region and a preparation method therefor.

### BACKGROUND

Wear-resistant steel, due to its excellent comprehensive mechanical properties, has become the most widely used wear-resistant material and is extensively applied in industries such as mining, machinery, metallurgy, and military engineering. With the rapid development of the iron and steel industry in China, the export orders for mining trucks are increasing, some engineering machinery is put into use in extremely cold regions with harsh working environments, leading to higher requirements for the wear-resistant steel. The wear-resistant steel is required to have not only good hardness, wear resistance, and yield strength, but also excellent low-temperature toughness.

To improve low-temperature impact toughness of the steel plate, process designers usually add a certain amount of Ni alloy to the molten steel, resulting in a significant increase in cost. In addition, some technicians also choose to add rare earth alloys to the molten steel. However, improper addition of rare earth alloys may also contaminate the molten steel and affect mechanical properties of the steel plate.

### SUMMARY

A technical problem to be solved by the present disclosure is to provide a rare earth-containing high-strength wear-resistant steel plate for an extremely cold region and preparation method therefor, thereby overcoming shortcomings in the prior art.

To solve the foregoing technical problem, the present disclosure employs technical solutions as follows.

A rare earth-containing high-strength wear-resistant steel plate for an extremely cold region is prepared from the following chemical composition in mass percentage: 0.20% to 0.24% of C, 0.20% to 0.35% of Si, 0.4% to 0.8% of Mn, 0.035% to 0.065% of Nb, 0.035% to 0.065% of V, 0.001% to 0.006% of Ti, 0.3% to 1.0% of Cr, 0.0003% to 0.0020% of B, 0.04% to 0.07% ofAlt, less than or equal to 0.0050% of N, less than or equal to 0.0002% of H, less than or equal to 0.015% of P, less than or equal to 0.0020% of S, more than or equal to 10 ppm of Ce, and a balance of Fe and inevitable impurities.

As a preferred scheme of the rare earth-containing high-strength wear-resistant steel plate for an extremely cold region, the rare earth-containing high-strength wear-resistant steel plate is prepared from the following chemical composition in mass percentage: 0.20% to 0.22% of C, 0.20% to 0.31% of Si, 0.4% to 0.6% of Mn, 0.035% to 0.058% of Nb, 0.035% to 0.062% of V, 0.001% to 0.004% of Ti, 0.3% to 0.9% of Cr, 0.0003% to 0.0017% of B, 0.04% to 0.05% of Alt, less than or equal to 0.0050% of N, less than or equal to 0.0002% of H, less than or equal to 0.015% of P, less than or equal to 0.0020% of S, more than or equal to 10 ppm of Ce, and a balance of Fe and inevitable impurities.

As a preferred scheme of the rare earth-containing high-strength wear-resistant steel plate for an extremely cold region, the rare earth-containing high-strength wear-resistant steel plate is prepared from the following chemical composition in mass percentage: 0.22% to 0.24% of C, 0.23% to 0.35% of Si, 0.5% to 0.8% of Mn, 0.041% to 0.065% of Nb, 0.039% to 0.065% of V, 0.003% to 0.006% of Ti, 0.5% to 1.0% of Cr, 0.0006% to 0.0020% of B, 0.05% to 0.07% of Alt, less than or equal to 0.0050% of N, less than or equal to 0.0002% of H, less than or equal to 0.015% of P, less than or equal to 0.0020% of S, more than or equal to 10 ppm of Ce, and a balance of Fe and inevitable impurities.

As a preferred scheme of the rare earth-containing high-strength wear-resistant steel plate for an extremely cold region, the rare earth-containing high-strength wear-resistant steel plate is prepared from the following chemical composition in mass percentage: 0.21% to 0.23% of C, 0.22% to 0.32% of Si, 0.5% to 0.7% of Mn, 0.039% to 0.062% of Nb, 0.038% to 0.062% of V, 0.002% to 0.004% of Ti, 0.5% to 0.8% of Cr, 0.0005% to 0.0017% of B, 0.05% to 0.06% of Alt, less than or equal to 0.0050% of N, less than or equal to 0.0002% of H, less than or equal to 0.015% of P, less than or equal to 0.0020% of S, more than or equal to 10 ppm of Ce, and a balance of Fe and inevitable impurities.

The present disclosure provides a preparation method for a rare earth-containing high-strength wear-resistant steel plate for an extremely cold region, including the following steps: hot metal desulfurization pretreatment, converter smelting, LF (ladle furnace) refining and RH (Ruhrstahl-Heraeus) refining, continuous casting, casting slab stacking cooling, casting slab acceptance, casting slab heating, descaling, rolling, air cooling, flaw detection, shot blasting, quenching, tempering, straightening, cutting and sampling, spray marking, inspection, and warehousing.

As a preferred scheme of the preparation method for a rare earth-containing high-strength wear-resistant steel plate for an extremely cold region, a mass fraction of S in hot metal after the hot metal desulfurization pretreatment and slag removal is less than or equal to 0.0030%.

As a preferred scheme of the preparation method for a rare earth-containing high-strength wear-resistant steel plate for an extremely cold region, 300 kg of aluminum blocks are added for deoxidation after converter smelting.

As a preferred scheme of the preparation method for a rare earth-containing high-strength wear-resistant steel plate for an extremely cold region, during RH refining, rare earth alloy is added before vacuum treatment, 5 to 15 minutes after the start of vacuum treatment, and upon completion of vacuum treatment.

As a preferred scheme of the preparation method for a rare earth-containing high-strength wear-resistant steel plate for an extremely cold region, during continuous casting, a tundish is baked for more than or equal to 5 hours.

As a preferred scheme of the preparation method for a rare earth-containing high-strength wear-resistant steel plate for an extremely cold region, weak controlled rolling is adopted during rolling, with a finishing rolling temperature of less than or equal to 910°C, a quenching temperature of 870°C to 930°C, and a tempering temperature of 140°C to 240°C.

The present disclosure has beneficial effects as follows.
(1) According to the present disclosure, an Ni alloy is eliminated from the chemical composition of the molten steel, and a certain amount of rare earth alloy is added before RH vacuum treatment, after a period of the start of vacuum treatment, and upon completion of vacuum treatment. The rare earth alloy is stepwise added to conduct deep deoxidation, sufficiently modify inclusions, and reduce the number of inclusions, thereby ensuring the hardness, wear resistance, and yield strength of the steel plate in extremely cold regions and reducing the preparation cost.
(2) The prepared steel plate prepared in the present disclosure has an impact energy KV2 of 64 J to 75 J at -60°C, a yield strength of 1236 MPa to 1260 MPa, a tensile strength of 1464 MPa to 1498 MPa, an elongation A50 of 14% to 17%, and surface hardness of 449 HB to 458 HB.

### DETAILED DESCRIPTION OF THE EMBODIMENTS

To make the content of the present disclosure more apparent and easier to understand, the present disclosure is further described in detail with reference to specific implementations and accompanying drawings.

Embodiment 1: This embodiment provides a rare earth-containing high-strength wear-resistant steel plate for an extremely cold region, which is prepared from the following chemical composition in mass percentage: 0.22% of C, 0.21% of Si, 0.50% of Mn, 0.055% of Nb, 0.050% of V, 0.003% of Ti, 0.40% of Cr, 0.0008% of B, 0.055% of Alt, less than or equal to 0.0050% of N, 0.0001% of H, 0.012% of P, 0.0008% of S, 15 ppm of Ce, and a balance of Fe and inevitable impurities.

A preparation method for the rare earth-containing high-strength wear-resistant steel plate for an extremely cold region includes the following steps: hot metal desulfurization pretreatment, converter smelting, LF refining and RH refining, continuous casting, casting slab stacking cooling, casting slab acceptance, casting slab heating, descaling, rolling, air cooling, flaw detection, shot blasting, quenching, tempering, straightening, cutting and sampling, spray marking, inspection, and warehousing.

A mass fraction of S in hot metal after hot metal desulfurization pretreatment and slag removal is less than or equal to 0.0030%. After converter smelting, 300 kg of aluminum blocks need to be added for deoxidation. Alloy needs to be baked in advance when the alloy needs to be added during LF refining. During RH refining, 30 kg of rare earth alloy is added before vacuum treatment, 8 minutes after the start of vacuum treatment, and upon completion of vacuum treatment, respectively. After the rare earth is added upon completion of RH vacuum treatment, static stirring is conducted for 13 minutes. During continuous casting, a tundish is baked for 5.5 h. Weak controlled rolling is adopted during rolling, with a finishing rolling temperature of less than or equal to 902°C, a quenching temperature of 870°C, and a tempering temperature of 210°C.

Mechanical properties of the steel plate are shown in Table 1.

Embodiment 2: This embodiment provides a preparation method for a rare earth-containing high-strength wear-resistant steel plate for an extremely cold region, the rare earth-containing high-strength wear-resistant steel plate is prepared from the following chemical composition in mass percentage: 0.23% of C, 0.22% of Si, 0.60% of Mn, 0.060% of Nb, 0.048% of V, 0.004% of Ti, 0.75% of Cr, 0.0010% of B, 0.058% of Alt, less than or equal to 0.0050% of N, 0.0001% of H, 0.012% of P, 0.0008% of S, 20 ppm of Ce, and a balance of Fe and inevitable impurities.

A preparation method for the rare earth-containing high-strength wear-resistant steel plate for an extremely cold region includes the following steps: hot metal desulfurization pretreatment, converter smelting, LF refining and RH refining, continuous casting, casting slab stacking cooling, casting slab acceptance, casting slab heating, descaling, rolling, air cooling, flaw detection, shot blasting, quenching, tempering, straightening, cutting and sampling, spray marking, inspection, and warehousing.

A mass fraction of S in hot metal after hot metal desulfurization pretreatment and slag removal is less than or equal to 0.0030%. After converter smelting, 300 kg of aluminum blocks need to be added for deoxidation. Alloy needs to be baked in advance when the alloy needs to be added during LF refining. During RH refining, 30 kg of rare earth alloy is added before vacuum treatment, 5 minutes after the start of vacuum treatment, and upon completion of vacuum treatment, respectively. After the rare earth is added upon completion of RH vacuum treatment, static stirring is conducted for 18 minutes. During continuous casting, a tundish is baked for 5 hours. Weak controlled rolling is adopted during rolling, with a finishing rolling temperature of less than or equal to 880°C, a quenching temperature of 880°C, and a tempering temperature of 210°C.

Mechanical properties of the steel plate are shown in Table 1.

**Table 1 Mechanical properties of steel plate in Embodiment**

| | Impact energy KV2/J at -60°C | Yield strength /MPa | Tensile strength /MPa | Elongation A50/% | Surface hardness /HB |
|---|---|---|---|---|---|
| Instance 1 | 64 | 1236 | 1498 | 17 | 458 |
| Instance 2 | 75 | 1260 | 1464 | 14 | 449 |

The present disclosure may have other implementations in addition to foregoing embodiments. The technical solutions obtained by equivalent replacement or equivalent transformation fall within the scope of protection of the present disclosure.

## Claims

1. A rare earth-containing high-strength wear-resistant steel plate for an extremely cold region, wherein the rare earth-containing high-strength wear-resistant steel plate is prepared from the following chemical composition in mass percentage: 0.20% to 0.24% of C, 0.20% to 0.35% of Si, 0.4% to 0.8% of Mn, 0.035% to 0.065% of Nb, 0.035% to 0.065% of V, 0.001% to 0.006% of Ti, 0.3% to 1.0% of Cr, 0.0003% to 0.0020% of B, 0.04% to 0.07% of Alt, less than or equal to 0.0050% of N, less than or equal to 0.0002% of H, less than or equal to 0.015% of P, less than or equal to 0.0020% of S, more than or equal to 10 ppm of Ce, and a balance of Fe and inevitable impurities.

2. The rare earth-containing high-strength wear-resistant steel plate for an extremely cold region according to claim 1, wherein the rare earth-containing high-strength wear-resistant steel plate is prepared from the following chemical composition in mass percentage: 0.20% to 0.22% of C, 0.20% to 0.31% of Si, 0.4% to 0.6% of Mn, 0.035% to 0.058% of Nb, 0.035% to 0.062% of V, 0.001% to 0.004% of Ti, 0.3% to 0.9% of Cr, 0.0003% to 0.0017% of B, 0.04% to 0.05% of Alt, less than or equal to 0.0050% of N, less than or equal to 0.0002% of H, less than or equal to 0.015% of P, less than or equal to 0.0020% of S, more than or equal to 10 ppm of Ce, and a balance of Fe and inevitable impurities.

3. The rare earth-containing high-strength wear-resistant steel plate for an extremely cold region according to claim 1, wherein the rare earth-containing high-strength wear-resistant steel plate is prepared from the following chemical composition in mass percentage: 0.22% to 0.24% of C, 0.23% to 0.35% of Si, 0.5% to 0.8% of Mn, 0.041% to 0.065% of Nb, 0.039% to 0.065% of V, 0.003% to 0.006% of Ti, 0.5% to 1.0% of Cr, 0.0006% to 0.0020% of B, 0.05% to 0.07% of Alt, less than or equal to 0.0050% of N, less than or equal to 0.0002% of H, less than or equal to 0.015% of P, less than or equal to 0.0020% of S, more than or equal to 10 ppm of Ce, and a balance of Fe and inevitable impurities.

4. The rare earth-containing high-strength wear-resistant steel plate for an extremely cold region according to claim 1, wherein the rare earth-containing high-strength wear-resistant steel plate is prepared from the following chemical composition in mass percentage: 0.21% to 0.23% of C, 0.22% to 0.32% of Si, 0.5% to 0.7% of Mn, 0.039% to 0.062% of Nb, 0.038% to 0.062% of V, 0.002% to 0.004% of Ti, 0.5% to 0.8% of Cr, 0.0005% to 0.0017% of B, 0.05% to 0.06% of Alt, less than or equal to 0.0050% of N, less than or equal to 0.0002% of H, less than or equal to 0.015% of P, less than or equal to 0.0020% of S, more than or equal to 10 ppm of Ce, and a balance of Fe and inevitable impurities.

5. A preparation method for the rare earth-containing high-strength wear-resistant steel plate for an extremely cold region according to any one of claims 1 to 4, comprising the following steps: hot metal desulfurization pretreatment, converter smelting, LF (ladle furnace) refining and RH (Ruhrstahl-Heraeus) refining, continuous casting, casting slab stacking cooling, casting slab acceptance, casting slab heating, descaling, rolling, air cooling, flaw detection, shot blasting, quenching, tempering, straightening, cutting and sampling, spray marking, inspection, and warehousing.

6. The preparation method for the rare earth-containing high-strength wear-resistant steel plate for an extremely cold region according to claim 5, wherein a mass fraction of S in hot metal after the hot metal desulfurization pretreatment and slag removal is less than or equal to 0.0030%.

7. The preparation method for the rare earth-containing high-strength wear-resistant steel plate for an extremely cold region according to claim 5, wherein 300 kg of aluminum blocks are added for deoxidation after converter smelting.

8. The preparation method for the rare earth-containing high-strength wear-resistant steel plate for an extremely cold region according to claim 5, wherein during RH refining, rare earth alloys are added respectively before vacuum treatment, 5 to 15 minutes after the start of vacuum treatment, and upon completion of vacuum treatment.

9. The preparation method for the rare earth-containing high-strength wear-resistant steel plate for an extremely cold region according to claim 5, wherein during continuous casting, a tundish is baked for more than or equal to 5 hours.

10. The preparation method for the rare earth-containing high-strength wear-resistant steel plate for an extremely cold region according to claim 5, wherein weak controlled rolling is adopted during rolling, with a finishing rolling temperature of less than or equal to 910°C, a quenching temperature of 870°C to 930°C, and a tempering temperature of 140°C to 240°C.
